# EUROPEAN PATENT APPLICATION

(11) **EP 1 873 496 A2**
(43) Date of publication of application: **02.01.2008**
(21) Application number: 07110891.4
(22) Date of filing: 22.06.2007
(51) Int. Cl.: G01C 21/36, G08G 1/0969

(54) **Navigation apparatus**

(30) Priority: 30.06.2006 JP 2006182796
(71) Applicant: AISIN AW CO., LTD., Anjo-shi, Aichi 444-1192 (JP)
(72) Inventor: Emoto, Michiko, Okazaki-shi 444-8564 (JP); Miyamoto, Shinya, AW SOFTWARE CO., LTD., Atsubetsu-ku, Sapporo 004-0051 (JP); Yamamoto, Kazuyoshi, AISIN AW CO., LTD., Atsubetsu-ku, Sapporo 004-0051 (JP)
(74) Representative: TBK-Patent

(57) **Abstract**

To transform the display mode of the structures located before the route when making turns, a navigation apparatus is described. In the event that the driving route is curved and the vehicle need to be turned, this navigation apparatus allocates three points (91,50,92) on the route which is before turning, during turning, and after turning, and sets a triangle region (98) which is formed with these three points. Subsequently, navigation apparatus sets a predetermined translucent ratio to the structures located within the triangle region (98), out of the structures in three-dimensional map data. Therefore, the structures are shown translucently and the route which is blind zone due to the structures may be displayed.

## Description

The disclosure of Japanese Patent Application No. 2006-189726; filed on June 30, 2006, including the specification, drawings and abstract is incorporated herein by reference in its entirety.

The present invention relates generally to a navigation apparatus, and more particularly to a navigation apparatus providing a three dimensional motion-image on a route guidance screen.

In recent years, navigation apparatuses for aiding in the navigation of vehicles have become very popular. Navigation systems include a function for searching for a route from a departing location to a destination, a function for detecting the location of self-vehicle by means of GPS (Global Positioning Systems) satellite and/or Gyro sensor, and a function for displaying a route to destination and current location of self-vehicle on the map, and so forth. It is important for such a navigation apparatus to provide an easily viewable display to a driver of the vehicle. For example, the following literature "Route guidance apparatus" discloses the technology to generate three-dimensional motion-image simulating the scene driver views.

With this three-dimensional motion-image, route is drawn on three-dimensional map drawing e.g., buildings, and intersection guidance and so forth can be performed. In the case of providing guidance on two-dimensional map, driver needs to interpret and correspond the viewing scene and two-dimensional map, however, with the technology in Patent Document 1, as displaying the scene with three-dimensional motion-image, the display by navigation apparatus and the actual scene can be corresponded easily. Furthermore, with the technology in Patent Document 1, in case that route and buildings are overlapped, an arrangement is made to visualize the route by displaying these buildings translucently or the like.

[Patent Document 1] Japanese Unexamined Patent Application Publication No. 9-318381

However, with the technology in Patent Document 1, the problem showed that as driving vehicle, navigation system needs to determine the overlaps of route and all the buildings at all points (where picture image be transformed) on route, therefore, the load of information-processing that navigation apparatus performs was great.

Accordingly, the object of the present invention is to transform a display form of buildings locating before route, when making turns, with less load of information processing.

### [Means for solving the Problems]

(a) The present invention, to achieve the object described above, in the invention described in Claim 1, is a navigation apparatus serving to provide guidance of route of vehicle to assigned destination; comprising: first reference point setting means for setting a first reference point at predetermined point on said route, second reference point setting means for setting a second reference point on the route where said vehicle enters to the predetermined point, third reference point setting means for setting a third reference point on the route where the vehicle exits from the predetermined point, region setting means for setting a region including triangle with vertexes of the first reference point, the second reference point, and the third reference point that were previously set above, map data obtaining means for obtaining three-dimensional map data around the predetermined point, three-dimensional motion-image generating means for setting a predetermined translucent ratio to the buildings located within said region out of the obtained three-dimensional map data, and generating a three-dimensional motion-image which displays the route overlapping the buildings previously set with the predetermined translucent ratio, and display means for displaying the created three-dimensional motion-image.

(b) In the invention described in Claim 2, the navigation apparatus according to Claim 1 includes determining means for determining whether or not the buildings represented by said three-dimensional map data are located within said region, and wherein the map data obtaining means obtains three-dimensional map data representing the buildings which were determined to be located within said region by the determining means.

(c) In the invention described in Claim 3, in the navigation apparatus according to Claim 2, the map data obtaining means obtains attribute of the buildings, of the buildings which were determined to be located within said region by the determining means, and in the case that the obtained attribute was the predetermined attribute, it obtains the three-dimensional map data representing these buildings.

### [Advantages]

According to the present invention, by setting a region at the side of inner circumference of turning direction and making the buildings in this region translucent, a display form of the buildings locating before the route can be transformed with low load of information processing when making turns,

Fig. 1 is a diagram illustrating an outline of a first embodiment of the invention.

Fig. 2 is a diagram illustrating a hardware structure of a navigation apparatus.

Fig. 3 is a diagram illustrating a structure of a road guidance system.

Fig. 4 is a diagram illustrating a guidance screen in the navigation apparatus.

Fig. 5 is a diagram illustrating a coordinate system used in the navigation apparatus.

Fig. 6 is a diagram illustrating a method of setting drawing a reference point.

Fig. 7 is a diagram illustrating a procedure to set a region for which data is to be read.

Fig. 8 is a diagram illustrating an example of regions for which data is to be read.

Fig. 9 is a diagram illustrating a method of determining structures within the region for which data is to be read.

Fig. 10 is a flowchart illustrating a procedure to provide route guidance by means of the cut-in movie.

Fig. 11 is a flowchart illustrating an alternative procedure to provide route guidance by means of the cut-in movie.

Fig. 12 is a diagram illustrating the region for which data is to be read at an intersection.

Fig. 13 is a diagram illustrating a method of displaying structures translucently.

### (1) Outline of the first embodiment

The navigation apparatus in this embodiment 1, as shown in diagram 1, sets rectangular regions for which data is to be read 22a through 22d along a route 2, in accordance with the shape of route 2 around a guidance intersection (not illustrated). Each of the rectangular is set as having a centerline which passes through two points set on the route 2. Also, in the case that route is curved and a vehicle makes turn, navigation apparatus 1 sets three points at before turning, during turning, and after turning on route, and defines a triangle region 22f that is formed with these three points. Subsequently, navigation apparatus 1 sets a predetermined translucent ratio to the buildings located within the triangle region 22f, out of the buildings constructing three-dimensional map data 22, to all the motion-image for the guidance intersection. Thus, by displaying the buildings located within triangle region 22f translucently all the time, it does not need to determine the overlaps of route and all buildings at every point (the point where the image changes) on route 2. Accordingly, the blind route due to buildings can be displayed with low load of information processing.

### (2) Detail of the first embodiment

The navigation apparatus in this first embodiment, as shown in diagram 1, sets rectangular regions for which data is to be read 22a through 22d along a route 2, in accordance with the shape of route 2 around a guidance intersection (not illustrated). Each of the rectangular regions is set as having a centerline which passes through two points set on the route 2. Also, at an intersection, navigation apparatus 1 sets a region for which data is to be read 80 in trapezoid spreading to the entrance direction of vehicle. By reading in three-dimensional map data 22 in region for which data is to be read 80 to draw, navigation apparatus 1 can draw the scene behind intersection with three-dimensional motion-image. Further, memory consumption can be decreased in comparison of setting the conventional rectangle region for which data is to be read.

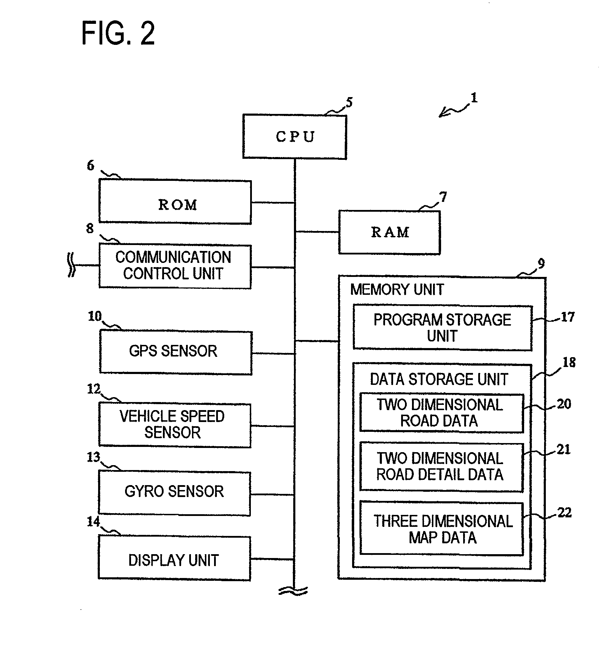

Fig.2 is a diagram illustrating an example of hardware configuration of navigation apparatus in this first embodiment. Navigation apparatus 1 includes a CPU (Central Processing Unit) 5, a ROM (Read Only Memory) 6, a RAM (Random Access Memory) 7, a communication control unit 8, a storage unit 9, GPS unit 10, a vehicle speed sensor 12, gyro 13, an image display unit 14, and so forth, and these units are connected, and provides route guidance to a set destination.

The CPU 5 is a central processing device, and performs various information processing such as route search, route guidance and so forth and controls a communication system 1 by following the programs stored in ROM 6, RAM 7, a storage unit 9, and so forth. The ROM 6 is a read-only memory for reading out only and stores basic programs, parameters and so forth for operating the navigation apparatus 1. The RAM 7 is a random access memory enabling writing in/reading out. For example, it provides a working area for CPU 5 to perform various information processing. Map data for display is read in to the RAM 7 from the storage unit 9. The communication control unit 8 is a functional unit for connecting to a network such as Internet. The Navigation apparatus 1 may communicate with an external server through the communication control unit 8.

The storage unit 9 is a storage device with mass-storage medium such as a semiconductor memory, a hard disk, an optical disk, a magneto optical disk and so forth, and forms a program storage unit 17 and a data storage unit 18. The program storage unit 17 may store an OS (Operating System) i.e. a basic program for operating the navigation apparatus 1, a route guidance program for CPU 5 to perform a route guidance processing, and so forth.

The data storage unit 18 may store map data made up of two-dimensional road data 20, two-dimensional road detail data 21, three-dimensional map data 22, and so forth. Two-dimensional road data 20 is map data displaying a road network with links that are connecting nodes. Two-dimensional road data 20 is used, for example, for CPU 5 to search for a route from a departing point to a destination.

The two-dimensional road detail data 21 is the map data for CPU 5 to display a two-dimensional map on an image display unit 14. The two-dimensional road detail data 21 includes information of road traffic lanes or information relating to various facilities such as restaurants, gas stations, schools, factories, and so forth, accordingly it may be possible to provide detailed geographic information to the driver. The three-dimensional map data 22 is three-dimensional city map data displaying a city with three-dimensional computer graphics using three-dimensional map data that defines three-dimensional information on structures. The term "structure" here refers to all displayed elements such as roads, railroads, buildings, ground and so forth, and each structure is given an attribute indicating an element classification of the structure such as "road", "railroad", "building", and/or "ground".

The GPS unit 10 receives GPS signal sent by an orbiting GPS satellite and provides it to CPU 5. The vehicle speed sensor 12 is a sensor for detecting the speed of vehicle. The Gyro 13 is a sensor for detecting the angular velocity of vehicle. With these GPS signal, the vehicle speed, the angular velocity and so forth, the CPU 5 may calculate the driving condition of vehicle such as latitude and longitude of the current location, the traveling direction, the speed, the acceleration, the volution and so forth.

The image display unit 14 includes, for example, LCD, plasma display, or other display devices, and may display the guidance screen that CPU 5 creates with two-dimensional road detail data 21, three-dimensional map data 22, and so forth. The image display unit 14 also has a touch panel function so that the driver may set a destination or other information in the navigation apparatus 1 by touching a menu shown on the display monitor. Thus, the image display unit 14 may function as destination set receiving means for receiving a setting of a destination. Note that, although not shown, the navigation apparatus 1 may include an audio output function so that it may provide route guidance with audio beside with the guidance screen.

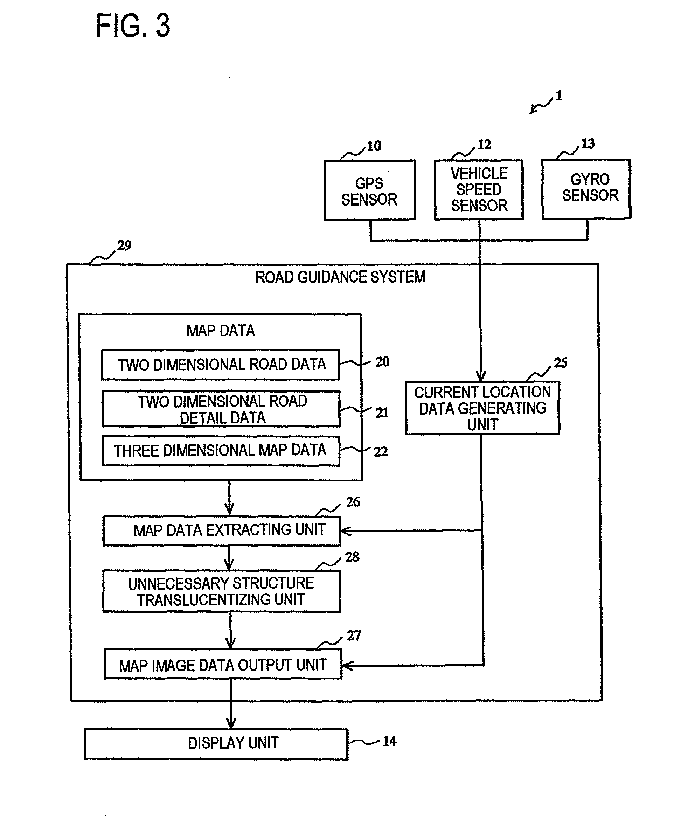

Fig.3 is a diagram illustrating an example of the system configuration of the road guidance system. The road guidance system 29 is formed when CPU 5 performs the route guidance program stored in the program storage unit 17. The current location data generating unit 25 generates current location data of vehicle on the basis of the GPS signal from GPS unit 10, detected scale from the vehicle speed sensor 12, the gyro 13 and so forth. Current location data includes information presenting the driving condition of vehicle such as latitude and longitude of the current location, the traveling direction, the speed, the acceleration, the volution, and so forth.

The map data extracting unit 26 receives the current location data from the current location data generating unit 25, and extracts map data from two-dimensional road detail data 21 and three-dimensional map data 22 to provide guidance at the current location As described later, regarding three-dimensional map data 22, the map data extracting unit 26 sets a region for which data is to be read along the route and extracts structures located within the region for which data is to be read, from among the structures in three-dimensional map data 22.

The unnecessary structure translucentizing unit 28 sets a triangle region at the side of inner circumference of turns in case that the route becomes blind due to buildings when vehicle turns. The unnecessary structure translucentizing unit 28 extracts the structures located in the triangle region out of the structures in three-dimensional map data 22, and sets predetermined translucent ratio to the extracted structures (e.g., 50%).

The map image data output unit 27 generates map image data for guidance with two-dimensional road detail data and three-dimensional map data extracted by the map data extracting unit 26 and outputs the image on the image display unit 14. The map image data output unit 27 obtains current location data from the current location data generating unit 25, and displays the current driving location of the vehicle, the traveling direction, and so forth with two-dimensional motion-image and/or three-dimensional motion-image on the basis of this data.

Regarding three-dimensional motion-image, the map image data output unit 27 sets a viewpoint on the basis of the current location acquired by the current location data generating unit 25, and calculates the two-dimensional image data which is for drawing the scene from this viewpoint in perspective by means of three-dimensional map data. Then the map image data output unit 27 creates two-dimensional image data in real time in accordance with the motion of the viewpoint, and by displaying the series of it sequentially on the image display unit 14, three-dimensional motion-image is displayed on the image display unit 14. Thus, the map image data output unit 27 functions as three-dimensional motion-image generating means for generating three-dimensional motion-image viewed from predetermined viewpoint on the basis of three-dimensional map data 22.

Note that the term "motion-image" described here includes that a picture shifts smoothly as well as that still images which are displayed at predetermined intervals so that driver may recognize their consecutive relation. When displaying motion-image, the smoother the motion-image displayed, the more processing ability or memory of CPU 5 is consumed, therefore, presenting motion-image with consecutive still images may decrease the load of the navigation apparatus 1. Each of still images consecutively displayed is the still image which viewpoint moves in accordance with the movement of current location. A relative position of viewpoint with respect to the traveling vehicle may be identical, however, in present embodiment, the relative position changes in accordance with the movement of current location.

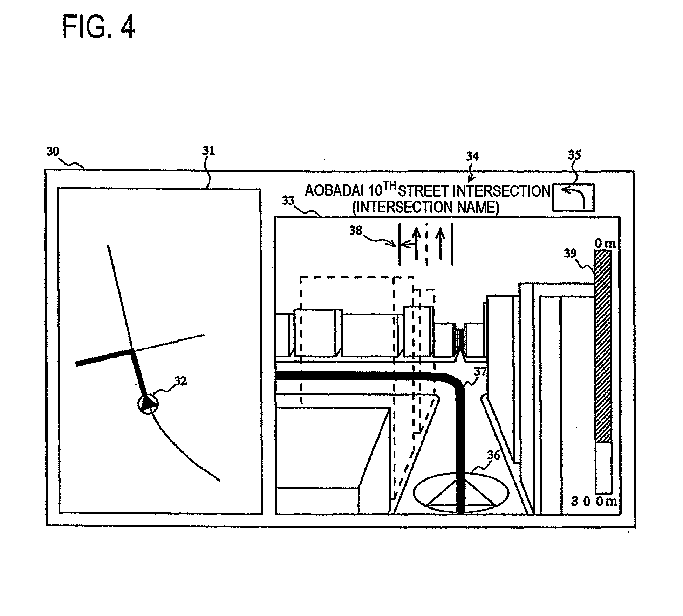

Fig.4 is a diagram illustrating an example of guidance screen displayed on the image display unit 14. The guidance screen 30 includes a two-dimensional map screen 31 and a three-dimensional map screen 33. The two-dimensional map screen 31 is drawn with two-dimensional road detail data 21, and the three-dimensional map screen 33 is drawn with three-dimensional map data 22. Note that guidance screen has various display modes, therefore it may be possible to display two-dimensional map screen 31 on full screen or also the enlarged two-dimensional map at the position of three-dimensional map screen 33.

On the two-dimensional map screen 31, the current location and the traveling direction of vehicle are displayed as self-vehicle icon 32 on the two-dimensional map around the vehicle drives. On the three-dimensional map screen 33, the motion-image presenting visible scene from vehicle by three-dimensional computer graphics is displayed. The direction of viewpoint is adjustable, and it generally faces the traveling direction of vehicle. In addition, the viewpoint is set above vehicle, and current position and traveling direction of vehicle are displayed as self-vehicle icon 36. Note that the viewpoint is adjustable.

On the three-dimensional map screen 33, a route 37 and/or traffic lane information 38 are displayed, and by following these instructions, driver may change a course or change a lane. In addition, on the three-dimensional map screen 33, a distance indicator 39 is displayed indicating the remaining distance to the guidance intersection that gives guidance of a course change. The maximum distance to guidance intersection (300m in Fig.) and the remaining distance to guidance intersection (corresponding to the length of the bar) are displayed. Additionally, at the top of the three-dimensional map screen 33, the name of the intersection 34 and an arrow 35 representing a turning direction are displayed.

The navigation apparatus 1 normally displays the two-dimensional map screen 31 on the full guidance screen 30. When vehicle approaches a guidance intersection, it begins to display the three-dimensional map screen 33. The three-dimensional map screen 33 keeps being displayed until the vehicle passes through the guidance intersection. As described above, when vehicle approaches guidance intersection, the navigation apparatus 1 begins to perform guidance with three-dimensional motion-image by three-dimensional computer graphics. This three-dimensional motion-image for route guidance is called a cut-in movie.

Cut-in movie is one kind of enlarged images of intersection, and driver may arrange it to be displayed or not displayed. The cut-in movie is displayed while vehicle drives on general roads, and the conventional guidance with the two-dimensional map screen 31 is provided when driving on expressways. The resolution of cut-in movie on the screen may be, for example, 512 x 480 dots (width x height) on VGA (Video Graphics Array).

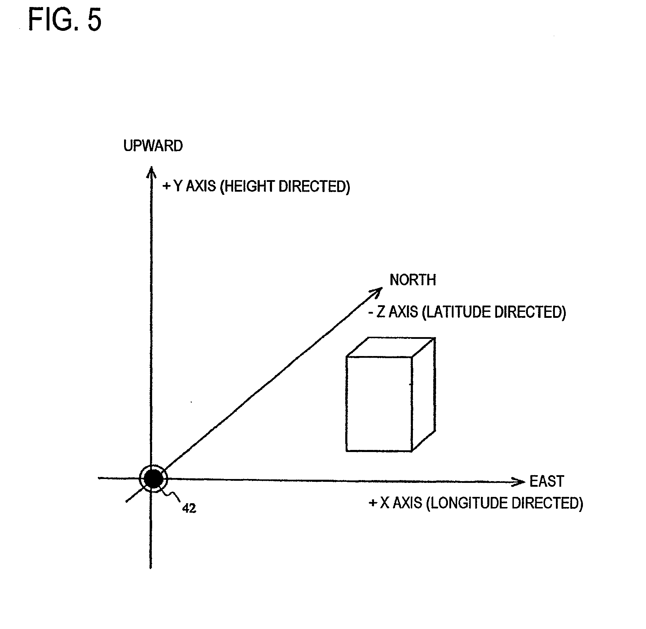

With reference to Fig.5 through Fig. 9, the function of generating cut-in movie in navigation apparatus will be explained as follows. This function is performed by the map data extracting unit 26. Fig. 5 is a diagram illustrating a coordinate system used in the navigation apparatus 1. The navigation apparatus 1 sets a drawing reference point 42 as origin of coordinate and sets longitude direction along X-axis and positive in easterly direction. It also sets latitude direction along Z-axis and negative in northerly direction, and height direction along Y-axis and positive in upward. The drawing reference point 42 is a reference point for the map data extracting unit 26 to set a region for which data is to be read, and it functions as a specified point on the route in present invention. Thus, the navigation apparatus 1 includes reference point setting means for setting a reference point at a specified point on route. In present embodiment as described below, a point within an intersection on the route may be set as a specified point (drawing reference point). More specifically, a center point in intersection, an intersection node, a closest complement point to an intersection node or a center point of intersection (in case of three-dimensional network data), a center point of a region where an entrance lane to an intersection and a departing lane from an intersection are crossing, and so forth. Further, when a specified point is set at any point but intersections on the route, for example, on a curve, a specified point (a drawing reference point) is set at a center point of the curve, at a point with largest curvature, on a common node for two adjacent links on a curve which angle between the two links is the smallest, and so forth.

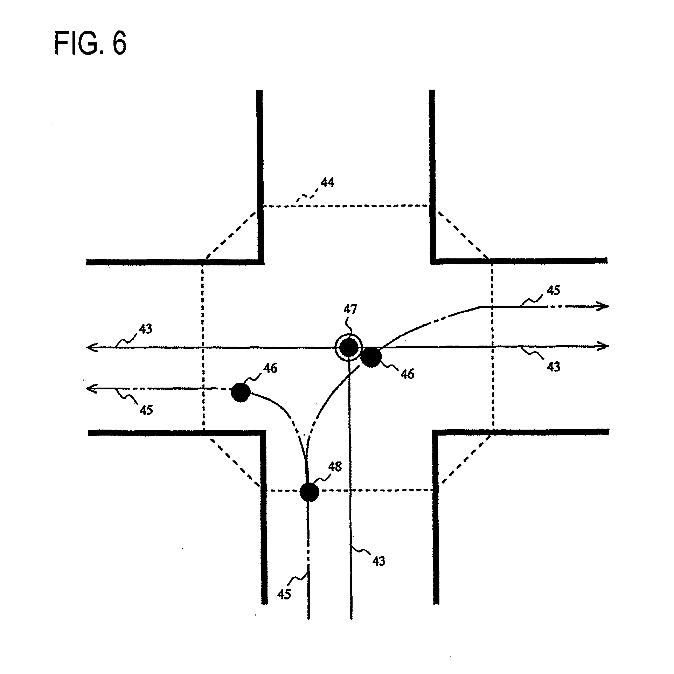

A method of setting a drawing reference point will be described in detail here with reference to Fig. 6. The navigation apparatus 1 sets a drawing reference point in an intersection guidance area 44 of a guidance intersection. The guidance intersection described here is the intersections where guidance is given by means of cut-in movie, such as the intersections with right/left turns, the intersections with complicated judgment on traveling direction such as three-road intersection or five-road intersection, and so forth. An arrangement may be made to preset a search condition for guidance intersection. For example, a condition that an intersection making turns or the like may be preset so that navigation apparatus 1 may detect the intersections fulfilling the search condition for guidance intersection. Alternatively, it may be possible to specify an attribute for each intersection to determine whether guidance should be given or not.

Generally, the navigation apparatus 1 sets a route on a link 43, 43, and 43, and sets a drawing reference point 47 on their node. A drawing reference point may be determined by other methods such as by obtaining a center point of an intersection guidance area 44 to define it as a drawing reference point, and so forth. There is an occasion of adjusting a view position in accordance with turns at a guidance intersection in order to provide a driver better visibility of cut-in movie. In that case, navigation apparatus 1 uses the drawing reference point 47 as a viewpoint adjusting reference point.

Note that a route is occasionally assigned by means of more detailed road map data (called three-dimensional network data) such as traffic lane data, and so forth. When a route is assigned on node, it is set on the center of road, however, when using detail road map data, a route may be set on a traffic lane. Detail road map data may provide complement points for drawing a leading curving line during the turn. In the case of assigning a route with these detail road map data, navigation apparatus 1 determines a closest complement point to a node to serve as a drawing reference point. Further, navigation apparatus 1 sets a viewpoint adjusting reference point at where a route enters an intersection guidance area 44. An arrangement may also possible to display a guidance line on the left side of road by displaying a route on the left of the centerline of the road.

In the example of the diagram, a drawing reference point 46 and 46 are set at a complement point on the route 45, 45, and 45. Note that in this diagram, a drawing reference point 46 and 46 is presented for two possible patterns which are right-turn or left-turn. The point where the route 45 enters the intersection guidance area 44 is set as a viewpoint adjusting reference point 48. Note that, as an additional rule, in the event that the distance from a point entering intersection guidance area 44 to a drawing reference point 46 is greater than a predetermined distance (e.g., greater than 40m), an arrangement may be made to set a point which is determined distance away from a drawing reference point 46 as a viewpoint adjusting reference point.

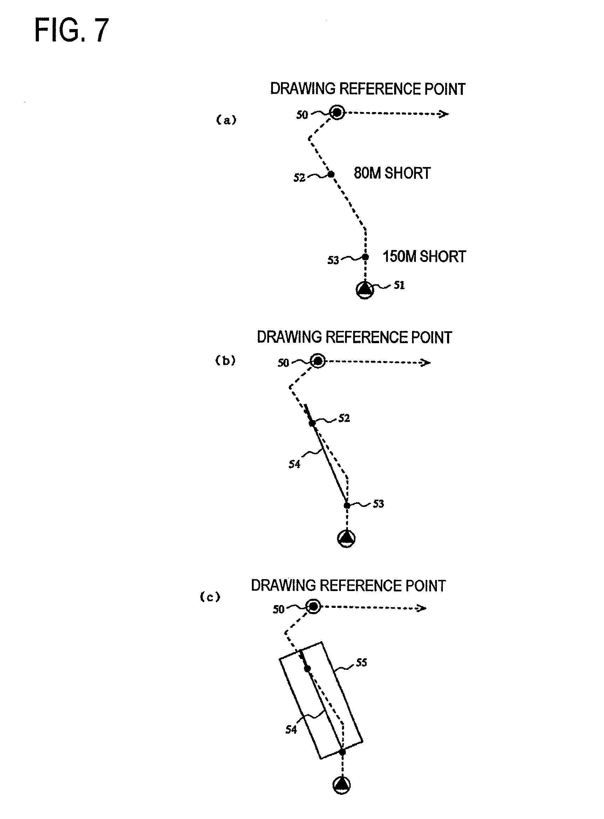

Next, a method of setting a region for which data is to be read will be described with reference to Fig.7. First, navigation apparatus 1, as shown in Fig.7 (a), sets a first point 52 and a second point 53 before a drawing reference point 50 (also serving as an origin of coordinate) in front of a self-vehicle 51 on the route displayed with dotted line.
A first point 52 is a point which is a first distance (herein 80m) away from a drawing reference point 50 along route, and a second point 53 is a point which is a second distance (herein 150m) away from a drawing reference point 50 along route. The second distance is greater than the first distance. Note that first distance and second distance are set as the distance along route here; however, they may be set as straight line distance from a drawing reference point.

In present embodiment the case that a first point and a second point are determined precisely at the position of the first distance and the second distance on route was already described. However, a first point and a second point can be determined at a node located around the first distance and the second distance (e.g., a node which is shortest distance, or a note which is shortest distance from the first distance and the second distance in opposite direction from a drawing reference point) by means of two-dimensional road data 20. In this case, a node located about 80m away from a drawing reference point 50 is set as a first point, and a node located about 150m away from a drawing reference point 50 is set as a second point. Route may be curved at a node, a node which is adjacent a first point may be a second point.

As described below, navigation apparatus 1 sets a region for which data is to be read based on a straight line connecting a first point and a second point. Therefore, navigation apparatus 1 may set a region for which data is to be read along route. Driver's view field moves along a route, therefore, setting a region for which data is to be read in accordance with the shape of the route may avoid reading in three-dimensional map data of irrelevant region for driver's view field.

An alternative case may be possible, for example, to set a first point and define a region for which data is to be read based on the line that is passing through the first point and alongside the link. Thus, navigation apparatus 1 includes point setting means for setting at least one point on the route.

Next, navigation apparatus 1, as shown in Fig.7 (b), set a line 54 which end-points are the first point 52 and the second point 53. Then, navigation apparatus 1 extends the side of first point 52 (the traveling direction of vehicle) on line 54 up to a predetermined length (herein 10m).

Next, navigation apparatus 1, as shown in Fig.7 (c), with the extended line 54 as a centerline, forms a quadrangle 55 which has a predetermined width (herein 30m) on each left and right side from the centerline 54, and sets it as a region for which data is to be read. The reason of extending the centerline 54 predetermined length in traveling direction of vehicle is to avoid any missing parts in three-dimensional map data to read in, by overlapping a region for which data is to be read that will be formed ahead of this region for which data is to be read (not shown) with the region for which data is to be read 55. By setting a region for which data is to be read as described, three-dimensional map data may be extracted along route without any missing parts.

Thus, navigation apparatus 1 includes region setting means for setting a region along the route including and basing on these points (first point and second point) specified above. This region setting means sets the region with rectangle (herein oblong) formed with this first and second point, and the straight centerline passing through this first and second point. Further, this region setting means sets the edge of the rectangle at the side of the first point in traveling direction of the vehicle with a predetermined distance away from the first point by extending the centerline in the traveling direction of vehicle.

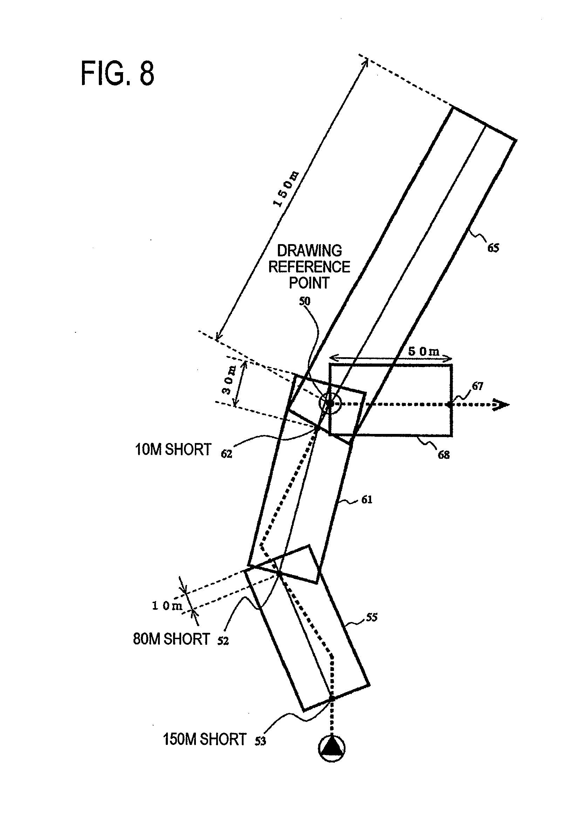

Fig.8 is a diagram of an exemplary region for which data is to be read that navigation apparatus 1 sets for a guidance intersection. Navigation apparatus 1, in order to obtain as similar shape of a region for which data is to be read as the shape of route possible, sets a total of four regions for which data is to be read including 61, 65, 68, in addition to 55, corresponding to a guidance intersection. Regarding a method of setting a region for which data is to be read 61, navigation apparatus 1 sets a first point 62 at 10m short of a drawing reference point 50 along route and uses a first point 52 as a second point, and forms a rectangle which has 30m on each left/right side, and accordingly sets this rectangle as a region for which data is to be read 61. The edge of the region for which data is to be read 61 is located at 30 m extended point of centerline from the first point 62 in traveling direction.

The reason of increasing the extension of centerline of the region for which data is to be read 61 more than the region for which data is to be read 55 is that the edge of the region for which data is to be read 61 in traveling direction is located nearby a guidance intersection. As a traveling direction of vehicle occasionally may shift greatly in a guidance intersection, increasing the overlaps of region for which data is to be read by increasing the extension can prevent any lack of three-dimensional map data in a guidance intersection. That is to say, in order to read in three-dimensional map data of the area displayed on a guidance screen even in a guidance intersection with significant level of turn, an arrangement is made to set a region for which data is to be read relatively large.

The region for which data is to be read 65 is a rectangular region based on a centerline which passes through a drawing reference point 50 serving as a first point and a first point 62 serving as a second point, and which has 30m on each left/right side. The centerline is extended 150m from a drawing reference point in entering direction. The scene toward entering direction is widely good view in a guidance intersection, therefore, navigation apparatus 1 sets a relatively large region for which data is to be read in entering direction. Thus, in the case that a first point locates in an intersection, navigation apparatus 1 sets greater predetermined distance (length of extension) to set the edge of the rectangular on the side of a first point, than other regions.

Regarding a region for which data is to be read 68, navigation apparatus 1 sets a drawing reference point 50 as a first point, a point 50m away from a drawing reference point 50 along the route as a second point, and sets a rectangular region with a centerline passing through a first point and a second point as the region for which data is to be read 68. The left/right width from a centerline is 30m each. Navigation apparatus 1 quits cut-in movie immediately after a vehicle completes a turn at a guidance intersection, therefore, it does not extend center line of the region for which data is to be read 68 which is drawing a scene after turning. Thus, without unnecessary extension of centerline, the amount of reading three-dimensional map data is decreased, and consequently the amount of memory consumption may be reduced.

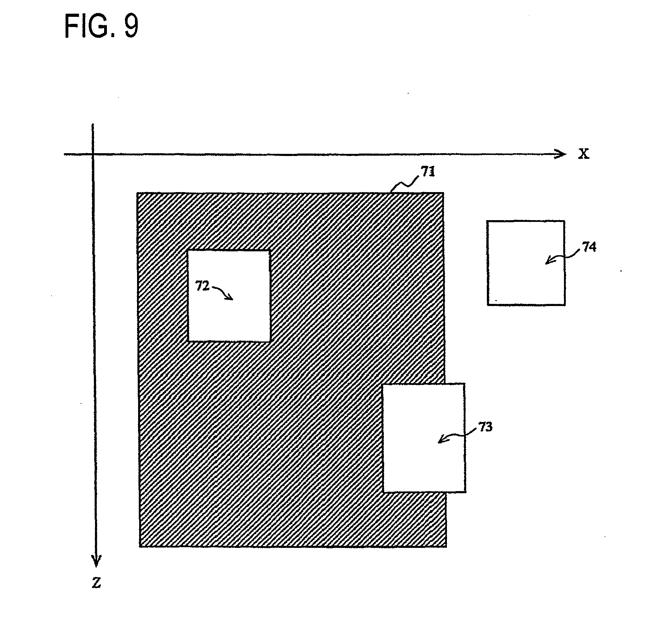

Next, a method of determining structure within a region for which data is to be read will be described with reference to Fig.9. The structures that are determined to be located within a region for which data is to be read here will be extracted from three-dimensional data 22. Navigation apparatus 1 (a map data extracting unit 26) forms a rectangle with vertexes of a smallest and a biggest X coordinate and Z coordinate of the structure on the X-Z plane. In the case of that at least a part of this rectangle is located within region for which data is to be read, navigation apparatus 1 determines the structure is located within the region for which data is to be read, and in the case that the region of this rectangle is not located within the region for which data is to be read at all, it determines the structure is not located within the region for which data is to be read.

According to the example shown in diagram, a rectangle 72 is entirely located within a region for which data is to be read 71, and also a rectangle 73 is partially located within a region for which data is to be read 71, therefore, the structures corresponding these rectangles become a subject for extraction. On the other hand, a rectangle 74 is not located within a region for which data is to be read 71 at all, therefore, the structures corresponding to the rectangle 74 does not become a subject for extraction. Thus, navigation apparatus 1 includes determining means for determining whether structures displayed with three-dimensional map data are located within a region for which data is to be read. Further, navigation apparatus 1 includes map data obtaining means for obtaining three-dimensional map data 22 of the region for which data is to be read that was previously set, and the obtained content may be the structures that were determined to be located within the region for which data is to be read by the determining means.

Giving other determining conditions and reducing the amount of memory consumption by eliminating three-dimensional map data to read in may be possible. For example, regarding structures whose element classification is other than road, when an arrangement is made to extract structures that the diameter of smallest sphere which can round the entity of the structure is more than predetermined length (100 m, for example) and at least a part of the sphere is located within a columnar structured space whose bottom area is the region for which data is to be read, the amount of memory consumption may be decreased without reading in the small structures that the diameter of sphere is less than predetermined length (Not important for drivers' field of view). Element classification here refers to a classification of structure such as road, railroad, building, and so forth, and it is given to structures as an attribute. Conditions such as reading in the structures whose element classification is road and not reading in the structures with other element classification among the structures located within the region for which data is to be read may be given.

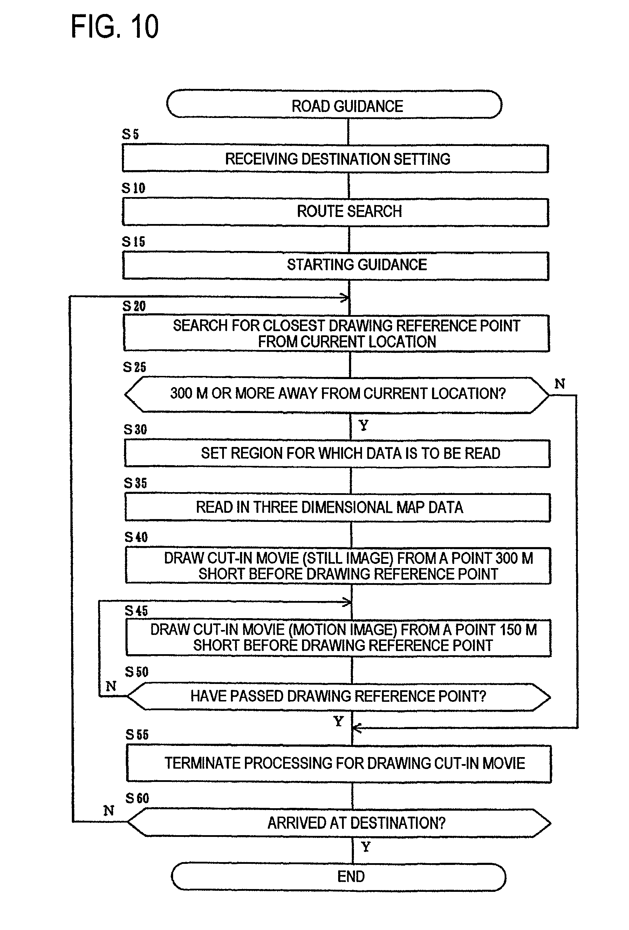

Next, with reference to a flowchart in Fig. 10, a procedure of road guidance that navigation apparatus 1 operates by means of cut-in movie will be described. The following processing is operated by CPUS, by following a road guidance program. First, navigation apparatus 1 receives a destination setting from a driver (Step 5). Next, navigation apparatus 1 performs a route search to the destination by means of two-dimensional road data 20 (Step 10), and starts providing guidance on a guidance screen (Step 15).

Then, navigation apparatus 1 sets a drawing reference point on, for example, a node in guidance intersection on the route. Arrangements may be made to set all the drawing reference points over the entire route in advance, or to set a predetermined number of drawing reference points which are closest from current location and set other drawing reference points sequentially in accordance with driving of the vehicle, or other methods may be applied to set them as well. Next, navigation apparatus 1 searches for a closest drawing reference point from current location (Step 20), and determines whether or not this drawing reference point is 300m or more away from the current location (Step 25). This is for judging whether there is enough time for generating and displaying cut-in movie. The distance may be longer or shorter than 300m, according to the information processing capability of navigation apparatus 1 and the speed of vehicle.

In the case that the distance from current location to a drawing reference point is less than 300 m (Step 25, No), navigation apparatus 1 terminates drawing processing of cut-in movie relating to this drawing reference point (Step 55). In this case, navigation apparatus 1 displays the two-dimensional enlarged image of guidance intersection instead of cut-in movie.

In the case that the distance from current location to a drawing reference point is more than 300 m (Step 25, Yes), navigation apparatus 1 defines a region for which data is to be read based on this drawing reference point (Step 30). Navigation apparatus 1 reads in the structures in the region for which data is to be read which was set in Step 30 among all the structures in three-dimensional map data.

Next, when the current location of vehicle reaches a point of 300 m away from a drawing reference point, navigation apparatus 1 generates the still image of three-dimensional motion-image of the viewpoint located 150 m before a drawing reference point, and displays it as cut-in movie (Step 40). This is for notifying a driver that cut-in movie will be displayed, and in a mean time, for performing a process of displaying three-dimensional motion-image while the sill picture is displayed. Then when current location of vehicle reaches the point of 150 m away from a drawing reference point, navigation apparatus 1 switches the still image to the motion-image, and displays three-dimensional motion-image in real time (Step 45).

Next, navigation apparatus 1 judges whether current location has passed a drawing reference point, and in the case of not having passed through (Step 50, No), it continues drawing cut-in movie. When having passed a drawing reference point (Step 50, Yes), navigation apparatus 1 terminates drawing cut-in movie (Step 55). Note that in present embodiment 1, an arrangement is made to terminate cut-in movie when current location passes a drawing reference point. However, for example, arrangement may be made to terminate cut-in movie when vehicle goes off the route and drive (In the case of off-route) or when the vehicle has traveled predetermined distance after passing a drawing reference point.

Then, navigation apparatus 1 judges whether current location has reached a destination, and in the case of not having reached (Step 60, No), it returns to Step 20 and performs a drawing processing of cut-in movie for next drawing reference point. In the case that current location has reached the destination, it terminates road guidance. Thus, in present embodiment 1, by setting region for which data is to be read limitedly along the route, the amount of three-dimensional map data read in for example, RAM7 (Fig. 2) may be reduced, and consequently, this may decrease the memory consumption.

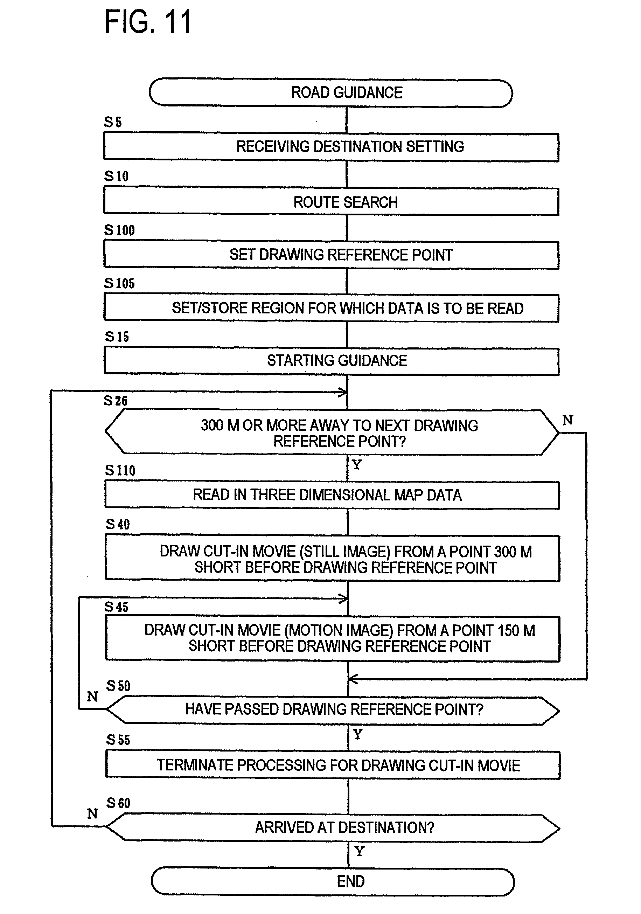

In the examples above, navigation apparatus 1 sequentially sets regions for which data is to be read in accordance with the traveling of vehicle. However, an arrangement may be made to set and memorize the regions for which data is to be read throughout the route at the start of driving, and read them out in accordance with traveling.
In this arrangement, as regions for which data is to be read are set beforehand when guidance starts, the ability of CPU 5 may be assigned more for displaying cut-in movie during traveling. A procedure of this case will be described with reference to a flowchart in Fig. 11. Note that the same processing as Fig. 10 will be given with the same reference numeral, and the description will be simplified.

First, navigation apparatus 1 receives a destination setting from a driver (Step 5), and performs a route search for destination (Step 10). Next, navigation apparatus 1 sets all the drawing reference points throughout the route (Step 100). Then, navigation apparatus 1 sets the region for which data is to be read for each preset drawing reference point, and stores them in a memory such as RAM 7 (Fig.2) or the like (Step 105). Then, navigation apparatus 1 starts providing guidance on the guidance screen (Step 15).

Next, navigation apparatus 1 judges whether or not the next drawing reference point (the first reference point if immediate after the departure) is more than 300 m away from current location (Step 26). In the event that the distance to next drawing reference point is less than 300m (Step 26, No), navigation apparatus 1 terminates the drawing process of cut-in movie for this drawing reference point (Step 55). In the event that the distance to next drawing reference point is more than 300m (Step 26, Yes), navigation apparatus 1 reads out the region for which data is to be read corresponding to this drawing reference point stored in memory, and reads in the three-dimensional map data in this region for which data is to be read among the three-dimensional map data 22 (Step 110). The rest of the process may be the same as the process in the flowchart in Fig. 10.

A guidance procedure with cut-in movie has been described above, but it is possible to give more detailed conditions for display of cut-in movie. For example, with the example previously described, in the case that the distance from current location to a drawing reference point is less than 300m, an arrangement was made not to perform a drawing of cut-in movie. However, an arrangement may be made wherein in case that the data for drawing cut-in movie has not been completed to generate (i.e., when incompletion of extracting three-dimensional map data) when current location reaches a point of 300m before a drawing reference point, navigation apparatus 1 determines not to perform a drawing of cut-in movie.

Also, in the case that the distance to an adjacent guidance intersection is more than 150m and less than 300m, an arrangement may be made for navigation apparatus 1 to display the guidance image of the next guidance intersection immediately after passing the first guidance intersection. In this case, when navigation apparatus 1 successfully draws the cut-in movie at the first intersection, it provides guidance with two-dimensional enlarged image at the next guidance intersection. When it does not draw cut-in movie at the first guidance intersection, it provides guidance with cut-in movie at the next guidance intersection.

In the case that the distance to an adjacent guidance intersections is less than 150m, navigation apparatus 1 provides guidance with two-dimensional enlarged image at the next intersection, despite that the guidance provided at the first guidance intersection was with cut-in movie or two-dimensional enlarged image. Additionally, at rotaries (roundabout intersections) or side roads, navigation apparatus 1 provides guidance in the same way as conventional navigation apparatus. Various conditions for drawing cut-in movie have been explained above. However, these are for providing as much guidance with cut-in movie as possible within the limits of an information processing capability of navigation apparatus 1. In case that information processing capability of navigation apparatus 1 is sufficient, guidance with cut-in movie may be performed at every guidance intersection, despite of the distance between current location and drawing reference point.

Hereinafter, advantages to be obtained according to the present embodiment 1 will be described.
(1) Setting a region for which data is to be read along the route may decrease the amount of the three-dimensional map data to read in the memory.
(2) It is possible to determine whether or not any structure is located within a region for which data is to be read and to prevent reading in unnecessary structure.
(3) It is possible to determine whether or not to draw cut-in movie on the basis of the distance between current location and drawing reference point, and cut-in movie may be drawn within information processing capability of CPU 5.

### (3) The detail of the second embodiment

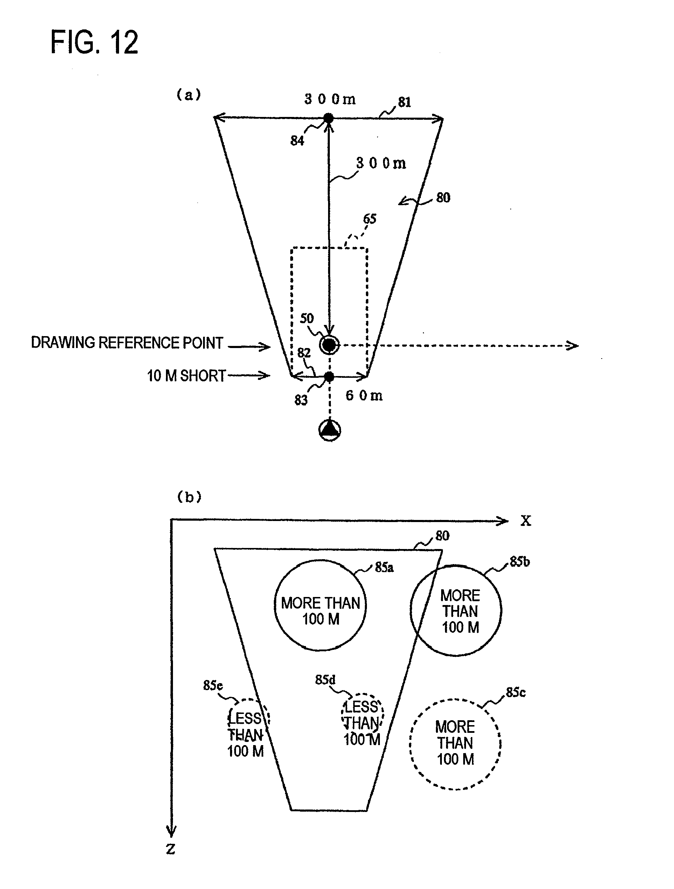

Next, the second embodiment wherein navigation apparatus 1 draws the view behind an intersection more faithfully will be explained with reference to Fig. 12. In the previous example, a region for which data is to be read was set behind an intersection with a region for which data is to be read 65 (Fig. 8). However, in this second embodiment, a region for which data is to be read will be set in trapezoidal shape whose width widens to the direction of behind an intersection, and more faithful three-dimensional motion-image corresponding actual scenery will be drawn.

Fig. 12(a) is a diagram illustrating an exemplary region for which data is to be read that navigation apparatus 1 sets in this second embodiment. An arrangement is made wherein a drawing reference point 50 is set in a guidance intersection and the route is turning to the right at the guidance intersection as shown with dotted line. Thus, navigation apparatus 1 includes reference point setting means for setting a reference point at an intersection. Navigation apparatus 1 connects the drawing reference point 50 and the point 83 located 10m before the drawing reference point with a straight line, and allocates the point 84 by extending this straight line 300 m in the entrance direction of vehicle.

Navigation apparatus 1 sets a region for which data is to be read 80 in trapezoidal shape based on the point 83 and 84 which has 30m right/left each (total 60 m) on the front side, and 150 m each (total 300m) on the rear side. Navigation apparatus 1 extracts three-dimensional map data 22 in the set region for which data is to be read 80, generates three-dimensional motion-image, and displays it on the guidance screen.

Note that the region for which data is to be read 80 may be set from a drawing reference point 50 in entrance direction. However, in this second embodiment, the region for which data is to be read 80 is set from a point 83 which is 10m before the drawing reference point 50, in order to unfailingly overlap other regions for which data is to be read at the intersection. Thus, navigation apparatus 1 includes region setting means for setting a region (the region for which data is to be read 80) from a reference point (the drawing reference point 50) in entrance direction which vehicle enters an intersection, map data obtaining means for obtaining three-dimensional map data of the region, three-dimensional motion-image generating means for generating three-dimensional motion-image viewed from a predetermined viewpoint on the basis of the three-dimensional map data, and display means for displaying the three-dimensional motion-image.

The region for which data is to be read 80 is a trapezoid whose side away from a vehicle is widened, corresponding to the depth of view. That is to say, the region for which data is to be read 80 is a trapezoid in which the far side (the side beyond the intersection) is longer than the closer side (the front side) to the vehicle position before entering intersection. Therefore, in the set region, the width of far side is longer than the width of closer side to the vehicle position. The determination whether or not the structure presented on the basis of three-dimensional map data 22 is located within the region for which data is to be read 80 may be performed by the method explained in Fig. 9.

When only important and big structures for drivers' view are extracted from three-dimensional map data 22, the amount of memory consumption may be decreased. An example of suchlike method of extracting structures will be explained as below. Navigation apparatus 1 forms a quadrangular prism whose base is the region for which data is to be read 80 with infinite height. Fig. 12 (a) denotes this quadrangular prism viewed from the height position.

Regarding the structures which element classification is other than road, navigation apparatus 1 forms a smallest sphere which may surround the entire structure for each structure, and the ones which diameter is less than predetermined value (100 m, for example) are excluded as the exempt of the extracting object. Regarding the structures whose sphere's diameter is more than predetermined value (100 m, for example), navigation apparatus 1 extracts the structures that at least a part of the sphere is included within the quadrangular prism from three-dimensional map data 22 as three-dimensional map data included within the region for which data is to be read 80.

In the example of Fig. 12 (b), the diameter of sphere 85a and 85b is more than 100 m. Further, at least a part of X-Z coordinate figure of the space created by the sphere is inside the region for which data is to be read 80, accordingly at least a part of sphere 85a and 85b is located within the quadrangular prism. Thus, the structures within the sphere 85a and 85b are extracted from three-dimensional map data 22.

On the other hand, the diameter is more than 100 m but it is not located within the quadrangular prism at all, accordingly sphere 85c does not become an extracting object. Also, as the sphere is located inside the quadrangular prism but the diameter is less than 100 m, sphere 85d does not become an extracting object. Furthermore, as a part is located inside quadrangular prism but the diameter is less than 100m, sphere 85e does not become an extracting object.

An arrangement may be made wherein the structures located within the region for which data is to be read 80 are extracted by the method of Fig. 9 and then refine the extracted structures according to their diameter of the sphere. Further, it may possible to combine the extracting conditions of the first embodiment described above and the extracting conditions of this second embodiment.

More specifically, an arrangement is made as follows. The region for which data is to be read 61, 65, and 68 shown in Fig. 8 overlaps the region for which data is to be read 81 shown in Fig. 12 (database 65 is shown with dotted line, and the region for which data is to be read 61, 68 are not illustrated). For the overlapped area with the region for which data is to be read 61, 65, 68 in the region for which data is to be read 81, the structures located within this overlapped area are extracted by the method described in Fig. 9. For not-overlapped area, the structures whose sphere's diameter is more than 100 m and at least a part of it is located within the quadrangular prism whose base is the region for which data is to be read 80 with infinite height will be extracted.

The region for which data is to be read 80 is larger than the region for which data is to be read 65 and so forth. Therefore, for the overlapped area with the region for which data is to be read 80, more structures are extracted by the method of Fig. 9 because it is located ahead of the vehicle and also close to the route. For not-overlapped area, the large structures are selected and extracted on the basis of predetermined value. Therefore, more accurate cut-in movie to the actual scene may be drawn while amount of the memory consumption is saved.

In addition, the following arrangement may be possible. When a vehicle approaches to a drawing reference point, the predetermined value for extracting structures may become small. When a vehicle approaches to a drawing reference point, smaller structures seem to look bigger, and with such setting with adjustable value, navigation apparatus 1 can display three-dimensional motion-image with more accurate scene.

As described above, navigation apparatus 1 explained in this second embodiment may generate a region for which data is to be read for reading in three-dimensional map data 22 corresponding to the back of guidance intersection based on the route information at the guidance intersection, and make judgment whether the structures are located within this region for which data is to be read. Also, the structures at the back of the intersection are drawn in perspective and small structures are not appealing. Therefore the sizes of the structures in the region for which data is to be read are determined whether is more than the figure with the use of a sphere. When judged to be more than the figure, the structures are read in and navigation apparatus 1 generates the three-dimensional motion-image which is similar to the actual scene. With three-dimensional motion-image similar to the actual scene, driver may correspond with the three-dimensional motion-image and the scene around the self-vehicle and accordingly it makes easy to recognize the location of self-vehicle.

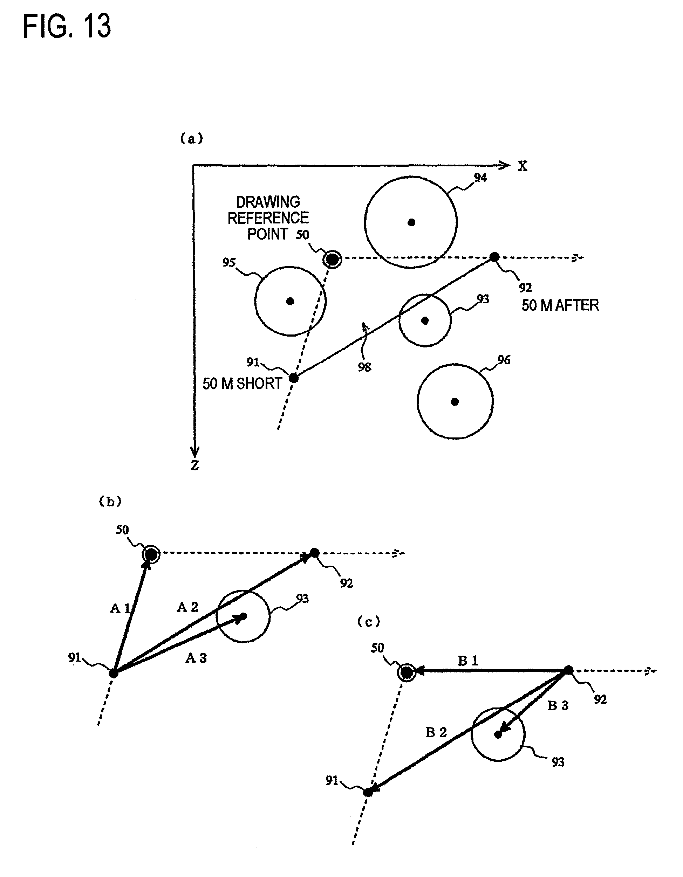

Next, with Fig. 13, a method of visualizing the route by making structures translucent in the case that the route becomes blind due to the structures will be explained. Note that this route visualization method with the translucence is applicable to the first embodiment and second embodiment as well as to the combined embodiment of the first embodiment and the second embodiment. Navigation apparatus 1, as shown in Fig. 13 (a), forms a triangle region 98 by connecting the point 91 which is predetermined distance (50m, for example) away from the drawing reference point 50 and the point 92 which is predetermined distance (50m, for example) away from the drawing reference point 50 after turning. Subsequently it performs the translucent processing for the structures in the triangle region 98 with predetermined translucent ratio (50%). Note that as far as the set region includes the triangle region 98, any larger area than that may be set.

Thus, navigation apparatus 1, despite of the positional relationship of viewpoint, route, and structures, performs the translucent processing uniformly for the structures in the triangle region 98 in three-dimensional map data 22. For this reason, navigation apparatus 1 has no need to calculate or make a judgment to determine whether the route becomes a blind area based on the positional relationship of viewpoint, route, and structures. Accordingly the load of navigation apparatus 1 may be decreased.

As described above, navigation apparatus 1 includes reference point 1 setting means for setting a reference point 1 (the drawing reference point 50) at a specified point such as an intersection or a curve and so forth whereat the route possibly become a blind area, reference point 2 setting means for setting a reference point 2 (the point 91) on the route where a vehicle enters the specified point, and reference point 3 setting means for setting a reference point 3 (the point 92) on the route where a vehicle exits from the specified point. Subsequently, navigation apparatus 1 has region setting means for setting a region including the triangle (the triangle region 98) whose vertexes are the reference point 1, the reference point 2, and the reference point 3.

Furthermore, navigation apparatus 1 includes map data obtaining means for obtaining three-dimensional map data 22 as three-dimensional map data around the specified point, and three-dimensional motion-image generating means for setting a predetermined translucent ratio to the structures located within the set region among the obtained three-dimensional map data and generating three-dimensional motion-image that displays the route overlapped with the structures with the predetermined translucent ratio (i.e., the route which became blind due to the structures makes the structures translucent).
Subsequently, this three-dimensional motion-image is displayed by the display means.

Navigation apparatus 1 makes judgment whether a structure is located within the triangle region 98 as below. First, navigation apparatus 1 sets a circle that the center of the structure is the center point of the circle and the greatest distance to its vertex. And navigation apparatus 1 extracts the structure that at least a part of the circle is located within the triangle region 98 and its element type is already set (for example, the ones that are blocking the views except for road or railroad, more specifically, building, pedestrian overpass, bridge pier, overhead roadway, tree, and so forth) (the first stage). Note that it is also possible to set an inscribed circle involving the entire structure and define the center as the center of the building.

In Fig. 13 (a), navigation apparatus 1 at a first step extracts the structures (which element type is the object for extracting) involved by the circle 93, 94, 95 as at least a part is located within the triangle region 98, and does not extract the structure involved by the circle 96. Thus, at the first step, circle 93, 94, 95 are extracted. However, only the structure involved by circle 93 needs to be refined because the structures involved by circle 95, 94 are on the outer circumferential side of the turn of the vehicle. Note that the reason of defining the area of the structure in the form of circle is that, for example, there are such structures which are located outside of the triangle region 98 but practically block the view, therefore these structures need to be the object for the translucent processing.

Navigation apparatus 1 distinguishes the structures located at the side of outer circumference and the structures located at the side of inner circumference of the turn by means of vector product, and narrows down the structures located at the side of inner circumference. Navigation apparatus 1, as shown in Fig. 13 (a), sets a vector A1 which has the point 91 serving as the origin and the drawing reference point 50 as the end-point, a vector A2 which has the point 91 as the origin and the point 92 after the turn as the end-point, and a vector A3 which has the point 91 as the origin and the center of the circle (the circle 93 in the Fig.) as the end-point. Subsequently, navigation apparatus 1 determines whetherA1 x A2 and A1 x A3 are the same directed vector. Note that the symbol "x" presents vector product, and A1 x A2 is the vector quantity for turning direction of right-screw (the direction from the surface through the other side of the paper in Fig.) when the screw turns from A1 to A2. In the case that the structure involved by the circle is located at the side of inner circumference of the turn for the entrance route to the drawing reference point 50, these vector products are both the vectors in the same direction.

Next, navigation apparatus 1, as shown in Fig. 13 (c), sets a vector B1 which has the point 92 after turn as the origin and the drawing reference point 50 as the end-point, a vector 2 which has the point 92 after turn as the origin and the point 91 as the end-point, and a vector 3 which has the point 92 after turn as the origin and the center of the circle (circle 93 in Fig.) as the end-point. Then, navigation apparatus 1 determines whether B1 x B2 and B1 x B3 are the same directed vector. In the case that the structure involved by the circle is located at the side of inner circumference of the turn for the exiting route from the drawing reference point 50, the both of these vector product are the same directed vector.

Navigation apparatus 1 calculates the vector product of the vector A1, A2, A3, B1, B2, and B3 for each circle as explained above and narrows down the circles that A1 x 2 and A1 x A3 are the same directed vector and also B1 x B2 and B1 x B3 are the same directed vector (the second stage). In the case of Fig. 13 (a), the circle 94 and 95 are excluded and the circle 93 is refined. Thus, navigation apparatus 1 extracts the structures from three-dimensional map data 22 through the first stage and the second stage of the extract processing, and performs the translucent-processing for these structures.

The building-extracting means described above is one example and structures may be extracted by other means. For example, for the triangle region 98, the means explained in Fig. 9 may be applied to extract the structures located within the triangle region 98, or the means explained in Fig.12 (b) may be applied to form the triangle prism which has the triangle region 98 as the base with infinite height and then extract structures which at least a part of the sphere involving the structure is located in the triangle prism. In addition to displaying the structures translucently, other displaying modes, for example, displaying with line drawing may be used.

Thus, navigation apparatus 1 includes determination means for determining whether the structures displayed with the three-dimensional map data are located within the set region through the process of the first stage and the second stage.

As described above, without performing the process on the basis of the positional relation of vehicle, route, and structures that constantly changes, navigation apparatus 1 may transform the display mode of the structures located in front of the route by the means of the translucent processing and so forth when the vehicle makes turn.

### [Object]

To transform the display mode of the structures located before the route when making turns.

### [Solving Means]

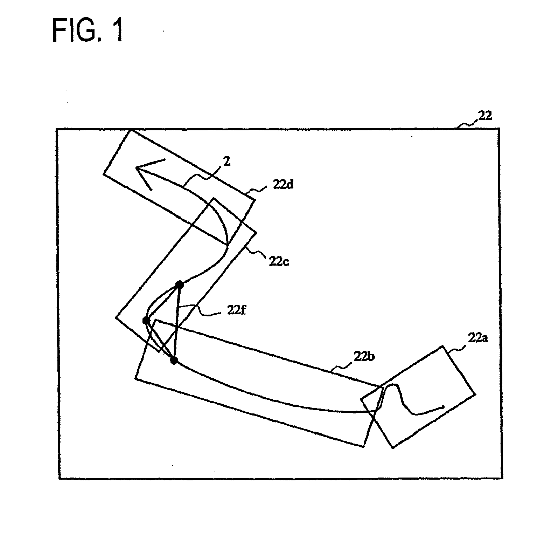

Navigation apparatus in this embodiment, as shown in Fig. 1, sets the rectangle regions for which data is to be read 22a - 22d along the route 2, in accordance with the shape of the route 2 around the guidance intersection (not illustrated). These rectangles are formed by setting two points on the route 2 with the centerline which is connecting these two points. In the event that the route is curved and the vehicle need to be turned, navigation apparatus 1 allocates three points on the route which is before turning, during turning, and after turning, and sets the triangle region 22f which is formed with these three points. Subsequently, navigation apparatus 1 sets a predetermined translucent ratio to the structures located within the triangle region 22f, out of the structures in three-dimensional map data 22. Therefore, the structures are shown translucently and the route which is blind zone due to the structures may be displayed.

## Claims

1. A navigation apparatus (1) for guiding a driving route of a vehicle to a set destination, comprising:
first reference point setting means (1) for setting a first reference point (50) at a specified point (50) on the driving route;
second reference point setting means (1) for setting a second reference point (91) on the driving route where the vehicle enters the specified point (50);
third reference point setting means (1) for setting a third reference point (92) on the driving route where the vehicle exits from the specified point (50);
region setting means (1) for setting a region (98) which includes a triangle with vertexes of the set first reference point (50), the set second reference point (91), and the set third reference point (92);
map data obtaining means (1) for obtaining three-dimensional map data (22) around the specified point (50);
three-dimensional motion-image generating means (1) for setting a predetermined translucent ratio to a structure included in the set region (98) out of the obtained three-dimensional map data, and for generating a three-dimensional motion-image which displays the driving route overlapped with the structure set with the predetermined translucent ratio; and
display means (1) for displaying the generated three-dimensional motion-image.

2. The navigation apparatus according to claim 1, comprising:
determining means for determining whether a structure represented by the three-dimensional map data is included in the set region, wherein the map data obtaining means obtains three-dimensional map data representing the structure determined to be included in the set region by the determining means.

3. The navigation apparatus according to claim 2, wherein the map data obtaining means obtains attribute of the structure determined to be included in the set region by the determining means, and if the obtained attribute is a predetermined attribute, obtains three-dimensional map data representing the structure.
